# EUROPÄISCHE PATENTSCHRIFT

(11) **EP 1 724 497 B1**
(45) Veröffentlichungstag und Bekanntmachung des Hinweises auf die Patenterteilung: **02.07.2008**
(21) Anmeldenummer: 06008261.7
(22) Anmeldetag: 21.04.2006
(51) Int. Cl.: F16H 61/26, F16H 59/04, F16H 61/36, F16C 27/02, F16C 33/20

(54) **Schaltvorrichtung**
Shifting device
Dispositif de changement de vitesses

(30) Priorität: 20.05.2005 DE 202005008177 U
(43) Veröffentlichungstag der Anmeldung: 22.11.2006
(73) Patentinhaber: Dura Automotive Systems Einbeck GmbH, 37574 Einbeck (DE)
(72) Erfinder: Grude, Ingo, 37643 Negenborn (DE)
(74) Vertreter: Sobisch, Peter

## Beschreibung

Die Erfindung bezieht sich auf einen Schaltvorrichtung für ein Fahrzeug entsprechend dem Oberbegriff des Anspruchs 1.

Um eine, im Wesentlichen aus einem Handschalthebel und einem zugehörigen Lagergehäuse bestehende Baugruppe über zwischengeordnete Übertragungselemente, z. B. ein Schaltgestänge mit den Eingangselementen eines zu schaltenden Wechselgetriebes eines Fahrzeugs funktionsgerecht verbinden zu können, ist eine genaue Einstellung sämtlicher Elemente erforderlich, um einwandfreie, leichtgängige Schaltvorgänge zu realisieren. Dem stehen jedoch häufig Maßtoleranzen der miteinander zusammenwirkenden Bauteile und gleichermaßen wechselnde thermisch bedingte Maßänderungen entgegen. Eine ungenaue Anpassung der genannten Elemente kann jedoch zu schwergängigen Schaltvorgängen und sogar zu Fehlschaltungen führen.

Aus der DE 44 41 826 C2 ist eine Schaltvorrichtung für ein Fahrzeugwechselgetriebe bekannt, bei der ein Anschlag, der einen Teil eines Systems einer Rückwärtsgangsperre bildet, entgegen einer Feder beweglich angeordnet ist, so dass eine Montage der Schaltvorrichtung bei eingelegtem Rückwärtsgang und zunächst gelöstem Anschlag erfolgen kann. Der Handschalthebel kann unter dem Einfluss der genannten Feder eine, Elastizitäten und Maßtoleranzen der Übertragungselemente ausgleichende Position einnehmen, wobei in der sich auf diese Weise ergebenden Position der Anschlag fixiert wird.

Aus dem DE 20 2004 003 836 U1 ist eine weitere Schaltvorrichtung bekannt, bei welcher ein Handschalthebel an seinem einen, einem Schaltknauf gegenüberliegenden Ende in einer ersten Lagereinheit in einem Lagergehäuse gelagert ist, wobei sich auf dem Handschalthebel oberhalb der genannten ersten Lagereinheit eine zweite Lagereinheit befindet, die mit einer Schaltstange in Verbindung steht, über welche die Verbindung mit einem zu schaltenden Getriebe hergestellt wird. Durch die zweite Lagereinheit verlaufen sowohl eine Wähl- als auch eine Schaltachse. Ein funktionsgerechtes Zusammenwirken insbesondere der zweiten Lagereinheit mit der Schaltstange muss durch eine genaue, Maßtoleranzen berücksichtigende Einstellung einer reproduzierbaren Ausgangslage sichergestellt werden.

Aus der DE 199 19 564 A1, die alle Merkmale des Oberbegriffes des unabhängigen Anspruchs 1 offenbart, ist eine Schaltvorrichtung für ein Fahrzeuggetriebe bekannt, bei welcher in einem Lagergehäuse eine Schaltwelle gelagert ist, die mit einem Handschalthebel in Wirkverbindung steht und die zur Übertragung von Schalt- und Wählbewegungen des Handschalthebels auf ein Fahrzeuggetriebe eingerichtet ist. Die Lagerung der Schaltwelle erfolgt in einer Aufnahmebohrung des Lagergehäuses mittels jeweils an deren Enden angeordneter, zur Schwingungsdämpfung aus Polyurethan ausgebildeter Lagerringen. Jeder der Lagerringe weist einen als Einschubbegrenzung wirkenden Ringkörper auf, an welchen sich ein Lagerkörper anschließt. Diese Art der Lagerung soll Vibrationen und Geräusche unterdrücken, die aus dem Antriebsbereich des Fahrzeugs, insbesondere auch aus dem Fahrbetrieb herrühren, die ansonsten den Fahrkomfort mindern und zu einem vorzeitigen Verschleiß von Bauteilen führen könnten.

Es hat sich gezeigt, dass insbesondere das Problem wechselnder thermisch bedingter Maßänderungen bei den bekannten Schaltvorrichtungen nicht sicher beherrscht wird. Nach Maßgabe der konstruktiven Ausbildung der Verbindung mit den Übertragungselementen zu dem zu schaltenden Getriebe kann sich auch eine Schallübertragung störend auf den Fahrkomfort auswirken.

Es ist daher die Aufgabe der Erfindung, eine Schaltvorrichtung der eingangs genannten Art mit Hinblick auf einen einfachen Aufbau sowie eine verbesserte Fähigkeit zum Toleranzausgleich hin auszugestalten. Gelöst ist diese Aufgabe bei einer solchen Vorrichtung durch die Merkmale des Kennzeichnungsteils des Anspruchs 1.

Erfindungswesentlich ist hiernach die Lagerung einer Schaltwelle, die mit einem Handschalthebel in Verbindung steht, innerhalb des Lagergehäuses der Schaltvorrichtung unter Zwischenanordnung besonderer Lagerringe, die in radialer Richtung elastisch ausgebildet und dazu bestimmt sind, Querkräfte von der zur Übertragung von Wähl- und Schaltbewegungen eingerichteten Schaltwelle auf die Innenwandungen der Aufnahmebohrung des Lagergehäuses zu übertragen. Unter elastischer Verformung dieser Lagerringe sind thermisch bedingte Maßänderungen der miteinander zusammenwirkenden Bauteile gleichermaßen aufnehmbar wie herstellungsbedingte Maßtoleranzen. Funktionsstörungen, die von diesen Maßabweichungen ansonsten ausgehen können, werden durch die erfindungsgemäße Lagerung der Schaltwelle wirkungsvoll vermieden.

Erfindungsgemäß besteht ein jeder der Lagerringe aus einem Ringkörper, an dessen beispielsweise einer Seite ein segmentierter Lagerkörper angeformt ist. Dieser besteht aus einer Anordnung von Ringsegmenten, die durch Schlitze voneinander beabstandet sind, wobei die Ringsegmente - in Umfangsrichtung gesehen - abwechselnd radial auswärts bzw. radial einwärts gewölbt ausgebildet sind. Infolge dieser gewölbten Ausbildung der im Übrigen untereinander gleich bemessenen Ringsegmente ist ein hohes Maß an radialer Elastizität gegeben.

In einer vereinfachten Ausführungsform ist es auch möglich, die Ringsegmente - in Umfangsrichtung gesehen - abwechselnd parallel zu der Achse des Ringkörpers bzw. radial einwärts oder radial auswärts gewölbt auszubilden. In vielen Fällen ist hiermit bereits ein ausreichendes Maß an radialer Elastizität bereit gestellt.

Gemäß den Merkmalen des Anspruchs 2 ist eine Ausgangslage bzw. Neutrallage der Schaltwelle über eine Feder elastisch gesichert, die einerseits an dem Lagergehäuse und andererseits an der Schaltwelle abgestützt ist. Sie definiert einen bestimmten Drehwinkel der Schaltwelle. Ähnliche Funktionselemente kommen zur Darstellung einer Ausgangslage hinsichtlich Wählbewegungen zum Einsatz.

Gemäß den Merkmalen des Anspruchs 3 sind die Lagerringe ferner mit Hinblick auf eine dämpfende, Schallemissionen bzw. Schallweiterleitung mindernde Eigenschaft hin ausgestaltet. Zu dieser Eigenschaft trägt die gewölbte Ausbildung der Ringsegmente bei, welche bei Belastung der Schaltwelle in einem vorgegebenen Ausmaß radial einfedern. Eine gleiche Federungseigenschaft ist in einem vorgegebenen Ausmaß auch zwischen dem Lagerring und der Aufnahmebohrung des Lagergehäuses gegeben. Unterstützt wird die Dämpfungseigenschaft der Lagerringe dann, wenn diese aus Kunststoff ausgebildet werden.

Man erkennt anhand der vorstehenden Ausführungen, dass in der erfindungsgemäßen Schaltvorrichtung eine kostengünstig herstellbare, sich durch eine besondere Fähigkeit zum elastischen störungsfreien Ausgleich von Maßabweichungen herstellungsbedingter oder thermisch bedingter Art auszeichnende Gruppe zur Verfügung gestellt ist. Diese Schaltvorrichtung ist von ihrem grundsätzlichen Aufbau bei schaltbaren Getrieben und bei Automatikgetrieben einsetzbar.

Die Erfindung wird im Folgenden unter Bezugnahme auf das in den Zeichnungen schematisch wiedergegebene Ausführungsbeispiel näher erläutert werden.

Es zeigen:

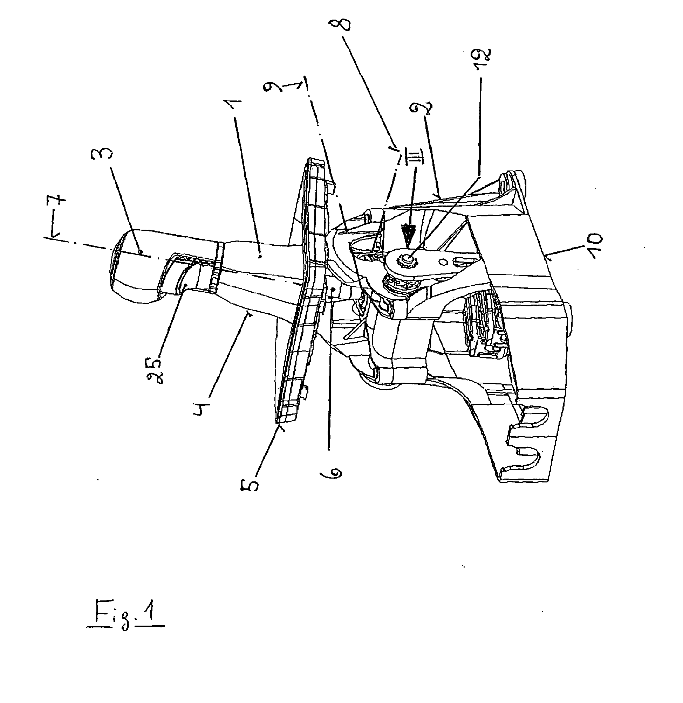

Fig. 1 eine perspektivische Darstellung eines erfindungsgemäßen Handschalthebels mit zugehörigem Lagergehäuse;

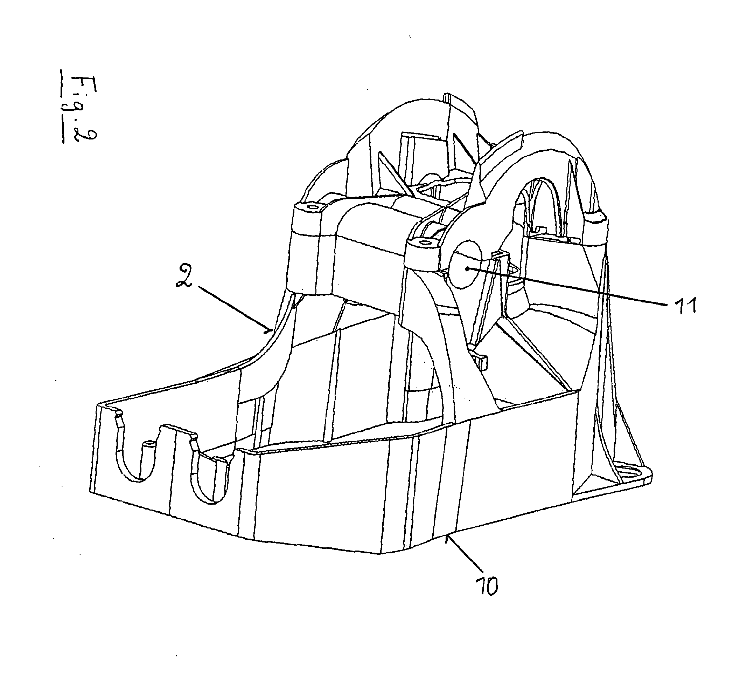

Fig. 2 eine isolierte perspektivische Darstellung des Lagergehäuses der Fig. 1;

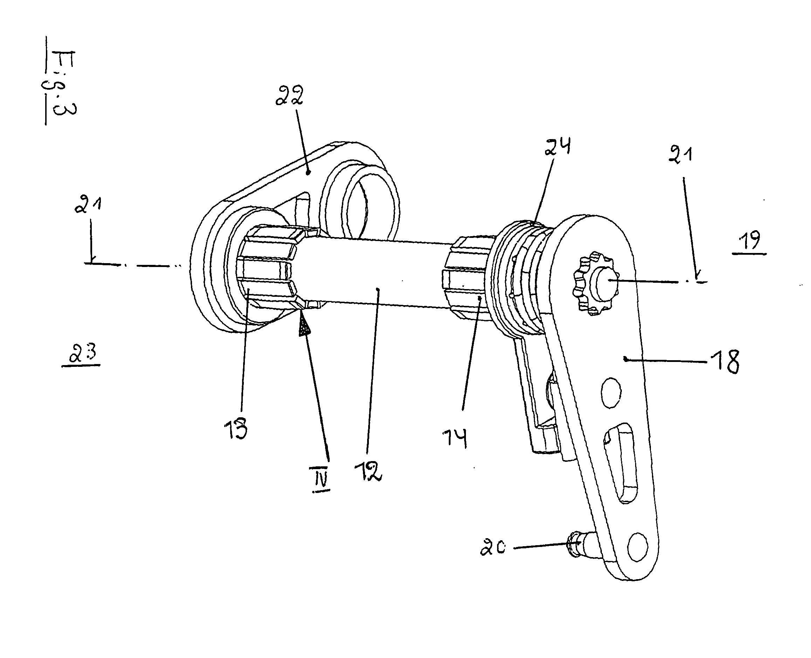

Fig. 3 eine isolierte perspektivische Darstellung einer Einzelheit III der Fig. 1;

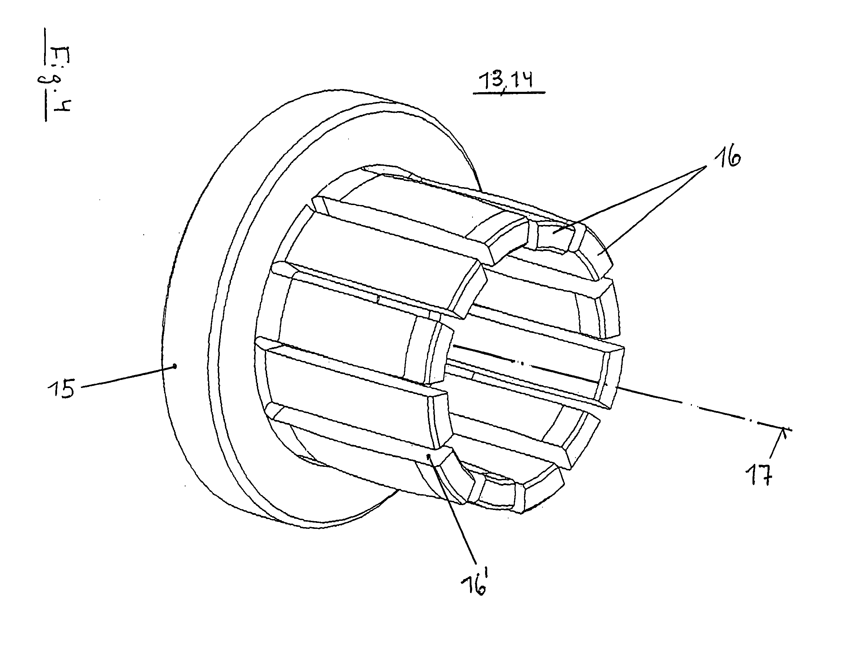

Fig. 4 eine isolierte perspektivische Darstellung einer Einzelheit IV der Fig. 3;

Mit 1 ist ein Handschalthebel für das Wechselgetriebe eines Fahrzeugs bezeichnet, der in einem Lagergehäuse 2 in zeichnerisch nicht wiedergegebener Weise unter Mitwirkung eines kugelförmigen Lagerkörpers in einer kugelschalenartigen Aufnahme gelagert ist. Das Lagergehäuse 2 ist zur festen Verbindung mit Strukturelementen der Karosserie bzw. des Fahrzeugrahmens bestimmt.

Der Handschalthebel 1 ragt oberseitig in den Fahrgastraum des Fahrzeugs hinein und endet in einem Schaltknauf 3, wobei in diesem oberen Abschnitt eine Umhüllung 4 bestehend beispielsweise aus Kunststoff oder Leder vorgesehen ist, deren eines Ende in der Nähe des Schaltknaufs 3 und deren anders Ende an einem, von dem Handschalthebel 1 durchdrungenen Karosserieteil 5 befestigt ist.

Der Handschalthebel 1 ist als langgestreckter, z. B. rohrförmiger, aus Metall oder auch Kunststoff bestehender Grundkörper 6 ausgebildet, dessen globale Längsachse mit 7 bezeichnet ist. Er ist unter Mitwirkung der erwähnten Kugellagerung in einer, die Horizontalachse 8 enthaltenden Wählebene und in mehreren, sich senkrecht zu dieser erstreckenden, parallel zu einer, eine weitere Horizontalachse 9 enthaltenden Ebene verlaufenden Schaltebenen nach Maßgabe der Eigenschaften des zu schaltenden Getriebes schwenkbar. Die durch die Achsen 8, 9 definierbare Ebene erstreckt sich im Wesentlichen parallel zu einer den Boden 10 des Lagergehäuses 2 bildenden Ebene.

Mit 11 ist eine Aufnahmebohrung des Lagergehäuses 2 bezeichnet, die sich üblicherweise in der, durch die Achsen 8, 9 definierten Ebene erstreckt und für die Aufnahme einer Schaltwelle 12 bestimmt ist. Zu diesem Zweck sind zwei untereinander gleich beschaffene Lagerringe 13, 14 vorgesehen, deren jeder aus einem geschlossenen Ringkörper 15 besteht, von dessen einer Seite, einen segmentierten, global zylindrischen Lagerkörper bildend, eine Reihe von Ringsegmenten 16 sich parallel zu der Achse 17 des Ringkörpers 15 erstrecken. Die Ringsegmente 16 sind unter Belassung von Längsspalten 16' nach Maßgabe einer gleichförmigen Umfangsverteilung vorgesehen. Sie sind ferner ausgehend von ihrer Anbindung an den Ringkörper 15 in Umfangsrichtung gesehen abwechselnd aufeinander folgend bezüglich der Achse 17 zu der radialen Außenseite bzw. zu der radialen Innenseite hin gewölbt ausgebildet.

In Verbindung mit der gleichförmigen Umfangsverteilung der Ringsegmente 16 ergibt sich auf diesem Wege ein spielfreier Sitz einerseits auf der Schaltwelle 12 und andererseits in der Aufnahmebohrung 11.

Beide Lagerringe 13, 14 sind von der Außenseite des Lagergehäuses 2 her in die Aufnahmebohrung 11 eingesetzt, so dass die Ringkörper 15 eine Einschubbegrenzung bilden. Aufgrund der vorstehend beschriebenen segmentierten Ausbildung der Lagerringe 13, 14 vermitteln diese nach Maßgabe ihrer absoluten Bemessungen, insbesondere der genannten Wölbungen sowie der Anzahl der Ringsegmente 16 ein beträchtliches Maß an radialer Elastizität. Aufgrund dieser Lagerung können Maßtoleranzen der Aufnahmebohrung 11 sowie der zur Übertragung von Wähl- und Schaltbewegungen bestimmten Schaltwelle 12 in einem weiten Bereich ebenso ausgeglichen werden wie thermisch bedingte Dehnungen miteinander in diesem Bereich kooperierender Bauteile.

Mit 18 ist ein, an dem einen Ende 19 der Schaltwelle 12 drehfest mit dieser verbundener, sich senkrecht zu deren Achse 21 erstreckender Hebel bezeichnet, der an seinem freien Ende einen Zapfen 20 trägt, der sich achsparallel zu der Achse 21 erstreckt. Die Schaltwelle 12 ist zur Übertragung von Schalt- und Wählbewegungen auf das zu schaltende Getriebe bestimmt, wobei der Zapfen 20 das Bindeglied zu zeichnerisch nicht dargestellten Übertragungselementen bildet die mit entsprechenden Eingangselementen des Getriebes in Verbindung stehen.

Mit 22 ist ein, an dem anderen Ende 23 der Schaltwelle 12 mit dieser drehfest verbundener Hebel bezeichnet, der sich senkrecht zu der Achse 21 und senkrecht zu dem Hebel 18 erstreckt. Das freie Ende dieses Hebels 22 steht mit dem Grundkörper 6 des Handschalthebels 1 in Wirkverbindung, so dass über diesen Hebel 22 Schalt- und Wählbewegungen in einer der vorstehend zitierten Schaltebenen auf die Schaltwelle 12 übertragen werden.

Mit 24 ist eine Feder bezeichnet, die einerseits an dem Lagergehäuse 2 abgestützt ist und die zur elastischen Sicherung einer Ausgangsposition bzw. Drehwinkels der Schaltwelle 12 dient.

Mit 25 ist eine, in die Struktur des Schaltknaufs 3 integrierte, unterseitig zum Teil aus diesem herausragende Taste bezeichnet, die einen Teil eines Rückwärtsgangsperrsystems bildet. Dieses erfüllt eine Funktion im Rahmen der Überführung des Handschalthebels 1 ausgehend von einer ersten Betriebsposition in eine weitere Betriebsposition, hier den Rückwärtsgang, wobei eine Sperrfunktion zu überwinden ist.

Die vorstehend beschriebene Schaltvorrichtung zeichnet sich aufgrund der in radialer Richtung elastisch nachgiebigen Lagerung der Schaltwelle durch eine verbesserte Fähigkeit zum Ausgleich fertigungsbedingter und thermischer bedingter Maßänderungen aus. Insbesondere bei einer Ausbildung der genannten Lagerringe aus Kunststoff weisen diese Dämpfungseigenschaften auf, so dass mit einer Minderung einer Übertragung sowie Emission von Schall zu rechnen ist.

## Patentansprüche

1. Schaltvorrichtung für ein Fahrzeuggetriebe bestehend aus einem, einen langgestreckten Grundkörper (6) aufweisenden, in einem Lagergehäuse (2) gelagerten Handschalthebel (1), der unter Zwischenanordnung von Übertragungselementen zur Verbindung mit dem Fahrzeuggetriebe eingerichtet ist und mit einer zur Übertragung von Schalt- und Wählbewegungen des Handschalthebels (1) eingerichteten und mit diesem in Wirkverbindung stehenden Schaltwelle (12), die in einer Aufnahmebohrung (11) des Lagergehäuses (2) mittels zweier, an deren Enden angeordneter, jeweils einen Ringkörper (15) aufweisender elastisch ausgebildeter Lagerringe (13,14) gelagert ist, **dadurch gekennzeichnet, dass** an wenigstens einer Seite des Ringkörpers (15) eines jeden Lagerringes (13,14) ein unter Belassung sich achsparallel erstreckender Schlitze (16') durch Ringsegmente (16) gebildeter, global zylindrischer, einen Ausgleich von Maßtoleranzen sowie thermischen Maßänderungen in radialer Richtung ermöglichender Lagerkörper angeformt ist und dass die Ringsegmente (16) in Umfangsrichtung des Lagerkörpers gesehen bezüglich dessen Achse (17) aufeinander folgend radial außenseitig bzw. radial innenseitig gewölbt ausgebildet sind.

2. Schaltvorrichtung nach Anspruch 1, **dadurch gekennzeichnet, dass** die Schaltwelle (12) in an sich bekannter Weise mittels einer Feder (24) zur Darstellung einer definierten Ausgangs-Drehwinkelstellung in Wirkverbindung steht.

3. Schaltvorrichtung nach Anspruch 1 oder 2, **dadurch gekennzeichnet, dass** die Lagerringe (13,14) mit Hinblick auf eine Minderung von Schallemissionen bzw. Schallweiterleitung hin ausgestaltet sind.

4. Schaltvorrichtung nach einem der vorangegangenen Ansprüche 1 bis 3, **dadurch gekennzeichnet, dass** an der Schaltwelle (12) Hebel (18,22) angeordnet sind, die zur Verbindung mit dem Handschalthebel (1) bzw. dem zu schaltenden Getriebe bestimmt sind.

## Claims

1. Gearshift device for a vehicle transmission consisting of a gearshift lever (1) which comprises an elongated basic body (6), is mounted in a bearing housing (2) and is arranged for connection with the vehicle transmission with interpositioning of transmission elements, and having a selector shaft (12) which is arranged to transmit shifting and selecting movements of the gearshift lever (1), is in operative connection therewith and is mounted in a receiving bore (11) of the bearing housing (2) by means of two resiliently formed bearing rings (13, 14) disposed on the ends of the selector shaft and each comprising an annular body (15), **characterised in that** on at least one side of the annular body (15) of each bearing ring (13, 14) is integrally formed an overall cylindrical bearing body which is formed by ring segments (16) thus leaving slots (16') extending in an axially parallel manner, and permits equalisation of dimensional tolerances and thermal dimensional changes in the radial direction, and **in that** the ring segments (16) are formed consecutively in a curved manner on the radially outer side or radially inner side as seen in the peripheral direction of the bearing body with respect to the axis (17) thereof.

2. Gearshift device as claimed in Claim 1, **characterised in that** the selector shaft (12) is in operative connection by way of a spring (24) in a manner known *per se* to produce a defined starting rotational angle position.

3. Gearshift device as claimed in Claim 1 or 2, **characterised in that** the bearing rings (13, 14) are designed with the aim of reducing sound emissions/conductions.

4. Gearshift device as claimed in any one of the preceding Claims 1 to 3, **characterised in that** levers (18, 22) are disposed on the selector shaft (12) and are intended to connect to the gearshift lever (1) or to the transmission to be shifted.

## Revendications

1. Dispositif de changement de vitesse pour une boîte de vitesses de véhicule comprenant un levier de changement de vitesse (1) présentant un corps de base (6) allongé et logé dans un boîtier de palier (2), qui est disposé avec intercalage d'éléments de transmission pour la liaison avec la boîte de vitesses du véhicule, et un arbre de changement de vitesse (12) aménagé pour la transmission de mouvements de changement de vitesse et de sélection du levier de changement de vitesse (1) et en liaison active avec ce levier, lequel arbre est monté dans un alésage de réception (11) du boîtier de palier (2) au moyen de deux bagues de palier (13, 14) réalisées de façon élastique, présentant chacune un corps annulaire (15) et disposées aux extrémités de l'arbre, **caractérisé en ce que** sur au moins un côté du corps annulaire (15) de chaque bague de palier (13, 14) est formé un corps de palier formé par des segments de bague (16) présentant des fentes (16') s'étendant sur des axes parallèles, globalement cylindrique, et permettant une compensation de tolérances de cote ainsi que des variations de cotes thermiques dans le sens radial, et **en ce que** les segments de bague (16) sont réalisés, vus dans le sens périphérique du corps de palier par rapport à son axe (17), consécutivement avec une forme incurvée radialement sur le côté extérieur et radialement sur le côté intérieur.

2. Dispositif de changement de vitesse selon la revendication 1, **caractérisé en ce que** l'arbre de changement de vitesse (12) est de façon connue en liaison active au moyen d'un ressort (24) pour la présentation d'une position définie d'angle de rotation de départ.

3. Dispositif de changement de vitesse selon la revendication 1 ou 2, **caractérisé en ce que** les bagues de palier (13, 14) sont conçues en vue d'une réduction des émissions de bruit ou d'une transmission de bruit.

4. Dispositif de changement de vitesse selon l'une quelconque des revendications précédentes 1 à 3, **caractérisé en ce que** sur l'arbre de changement de vitesse (12) sont disposés des leviers (18, 22) qui sont destinés à la liaison avec le levier de changement de vitesse (1) et la boîte de vitesses à manoeuvrer.
